Europäisches Patentamt

European Patent Office

Office européen des brevets

(19)

(11) Publication number: **0 193 975**
**B1**

(12) **EUROPEAN PATENT SPECIFICATION**

(45) Date of publication of the patent specification:
05.07.89

(21) Application number: **86200054.4**

(22) Date of filing: **14.01.86**

(51) Int. Cl.⁴: **B 29 C 67/22**, B 65 D 1/34,
B 65 G 59/06

(54) Method for producing thin-walled trays, applicable as packing material.

In accordance with the last part of Art. 14 (2) EPC the applicant has filed a text with which it is intended to bring the translation into conformity with the original text of the application.

(30) Priority: 15.01.85 NL 8500079
23.04.85 NL 8501169

(43) Date of publication of application:
10.09.86 Bulletin 86/37

(45) Publication of the grant of the patent:
05.07.89 Bulletin 89/27

(84) Designated Contracting States:
AT BE CH DE FR GB IT LI LU NL SE

(56) References cited:
EP-A- 0 114 503
EP-A- 0 128 868
DE-A- 3 032 271
FR-A- 2 005 389
GB-A- 1 158 181
NL-A- 7 309 281
US-A- 2 640 606
US-A- 3 563 445
US-A- 4 302 549

(73) Proprietor: Industriele Producten Brabant B.V.,
Zeedijk 25, NL-4871 NM Etten-Leur (NL)

(72) Inventor: van Oosterhout, A., Heul 75, NL-4874 LB
Etten-Leur (NL)

(74) Representative: Noz, Franciscus Xaverius, Ir. et al,
Algemeen Octrooibureau P.O. Box 645, NL-5600 AP
Eindhoven (NL)

(56) References cited: (continuation)
PATENTS ABSTRACTS OF JAPAN, vol. 6, no. 263
(M-181) [1141], 22nd December 1982; & JP - A - 57 156
925 (FUJI SHASHIN FILM K.K.) 28-09-1982

ACTORUM AG

## Description

The invention relates to a method for producing thin-walled trays, which are provided with one of more de-stacking slots, applicable as packing material, from polystyrene, by supplying prepared polystyrene granules to a mould in which the granules are heated so that they expand, the thus obtained plate-form being cooled and removed from the mould after stabilization.

The production of objects from plastic material by using a mould to which the plastic granules are supplied, and whereby the plastic granules are heated in the mould so that the plastic material takes on the form of the mould is known from EP-A-0 114 503. In this specification a method has been disclosed for preparing an antistatic material as well as cups and holders produced from that antistatic material by preparing the granules and then heating them so that they expand. The present aim and products are different from the objectives and products as indicated in the above-mentioned European patent application.

From DE-A-3 032 271 an apparatus is known for the production of objects produced from a thermoplastic resin such as polystyrene, going out from polystyrene granules, in which apparatus the inner part of the mould is coated with a heat isolating layer except that part of the mould where the product is formed. In this specification no information has been given concerning the specific production of thin-walled plates, for which it is important that with a minimum amount of polystyrene in the form of granules or beads, coated with an agent, an end product can be obtained in which the expanded beads can form the thin-walled plates without holes. In the packaging industry many trays or plates are used for prepacking meat, poultry, vegetables, fruit and fish. For over 25 years butchers have been using plates for weighing sliced meat in them. At first cardboard plates were used for this purpose, but their disadvantage was that the moisture from the meat soon softened them and thus they lost their form-stability, whilst the wet cardboard plates were a breeding ground for undesired growth of bacteria, fungi and the like. An improvement in respect of such packing materials was found in producing plates from polystyrene, which plates, as a result of the minimum absorption of moisture, retained their form better and besides polystyrene is not a good breeding ground for fungi and bacteria. These polystyrene plates were manufactured from extruded polystyrene film by using a moulding system under subatmospheric pressure. Such plates are known from the Dutch patent applications 6 904 977 and 7 309 281. These two patent applications are specifically directed to structure of the bottom in which elevations have been provided so that the moisture from the meat to be stored is no longer in direct conctact with the meat during storage and the plates can be stacked better. Most of the known plates are produced from a smooth film, so that the moulding of the plates has its restrictions as regards the various thicknesses of the material with a certain product. These polystyrene plates produced by extrusion of a smooth film might be improved, because the known plates slightly deviate from each other with regard to their form and dimensions. Also the form-stability can be further improved by providing the plate e.g. with an edge thicker than the centre part of the plate. If, however, a thicker foil is used, so that the minimum required edge thickness is obtained, these plates become too expensive and too heavy, because the centre part also becomes proportionally thicker in that case. The deviations in the form of the known plates are especially a problem when the plates are handled automatically in automated packing equipment, e.g. for packing meat, poultry and fish, because de-stacking or de-nesting the plates is difficult when these plates are not stacked in a reproducable manner. With mechanical packing, moreover, higher demands are made on the form-stability of the plates.

The known polystyrene plates have now been improved by using a method for producing plates as indicated in the beginning and said method is characterized in that preparation of the polystyrene granules, i.e. the coating of the granules, is carried out in line with the production of the plates in the moulds.

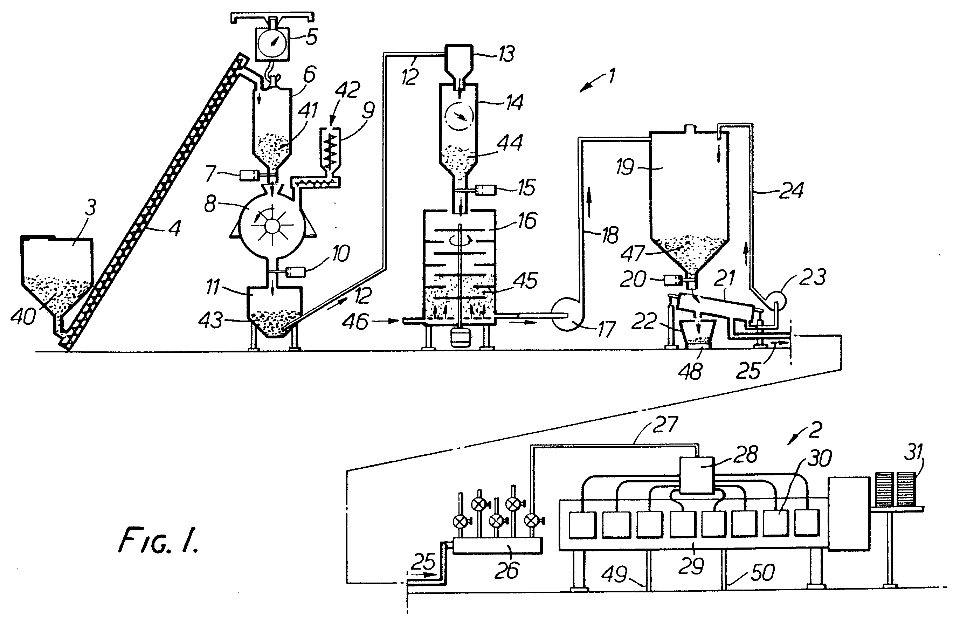

As a result of the in-line preparation of the polystyrene granules no detectable differences occurred between the prepared polystyrene granules, so that equally divided material was present in the mould which material flowed evenly as a result of heating, so that no more air inclusions occurred. The preparation of the polystyrene granules takes place in the first part of the device according to fig. 1 and consists of the application of an upper layer, the enlargement of the diameter of the granules by pre-expansion and the sifting of the pre-expanded granules. The prepared material is directly supplied to the moulds, so that the prepared material supplied is as homogeneous as possible.

The invention will be further explained hereinafter with reference to the following description, whereby reference is made to the appended drawing, in which:

Fig. 1 is a process diagram for preparing the polystyrene granules and the mould processing.

Fig. 2 is a section of a mould and

Fig. 3 is a perspective view of a plate according to the invention, stacked.

Part 1 of fig. 1 illustrates the preparative part of the in-line preparation of polystyrene, from which in part 2 the plates are produced.

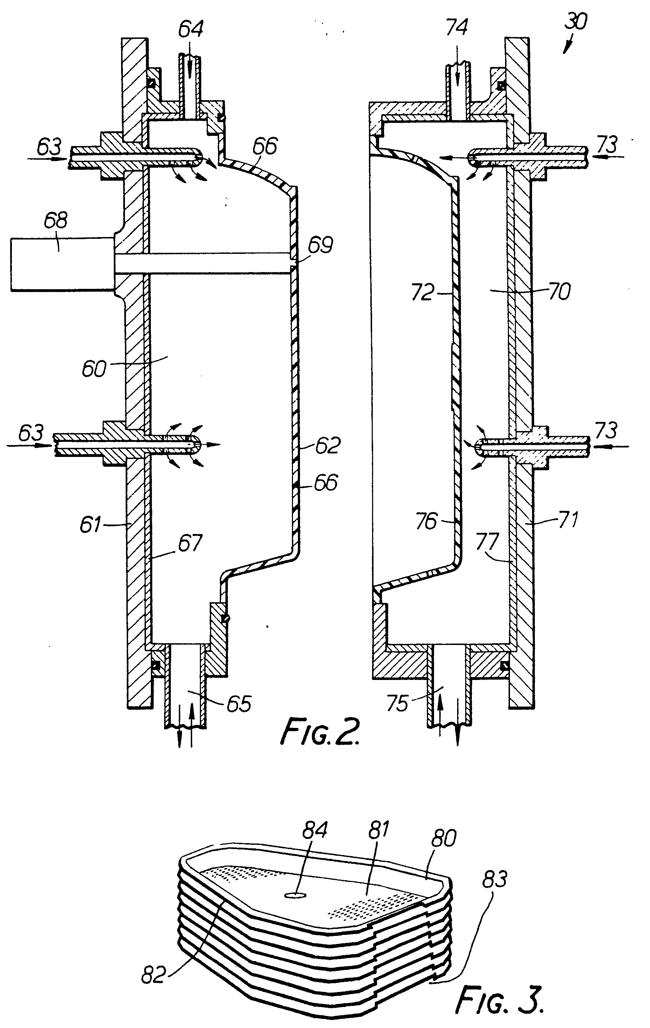

Polystyrene granules are supplied to funnel 3. During an as such known polymerization pentane is added to said polymer granules, so that a quantity of about 5 per cent by weight of pentane is included in the granules, which serves as a driving or blowing agent, whereby, however, also other agents with a relatively low boiling point can be applied. Said pentane containing polystyrene granules 40 are supplied to a weighing device 5 by means of a screw conveyor 4, so that a weighed quantity of pentane containing polystyrene granules 41 is supplied to container 6. By means of a pneumatically operated shut-off valve 7 the weighed quantity of polystyrene is supplied to mixer 8. By means of dosaging device 9 and agent forming an upper layer, such as a stearate, specifically zinc stearate, is supplied to mixer 8 via intake 42. The upper layer agent is supplied in a quantity of about 0.5%, calculated on the polystyrene granules. As soon as an equal upper layer of the stearate round the polystyrene granules has been obtained, shut-off valve 10 is opened and the material 43 provided with an upper layer is supplied to supply container 11. Via pipe 12 the homogeneous polystyrene, provided with an upper layer, is sucked via suction device 13 into the weighing device 14, so that a certain weighed quantity of polystyrene provided with an upper layer is present there. By means of shut-off valve 15 said weighed quantity of material 44 is supplied to pre-expander 16, whereby steam 46 is supplied at the bottom side, so that a pre-expansion of the polystyrene granules 45 takes place. As a result of this the polystyrene granules are enlarged from 0.3–0.4 mm diameter to about 1 mm and said enlarged granules are supplied, by means of fan 17 via pipe 18, to silo 19, in which the pre-expanded polystyrene material 47, provided with an upper layer, is present. By means of shut-off valve 20 this material 47 is supplied to a vibrating sieve 21, so that a too fine-grained fraction 48 is discharged into container 22 and the too coarse-grained material is supplied to silo 19 by means of fan 23 via suction pipe 24. On passing the fan 23 and in suction pipe 24 the coarse-grained material can be made smaller sot that with a second circulation said coarse-grained material can be brought within the desired granule size and be supplied, together with the larger part of the granular material, via pipe 25, to collecting room 26 from where various plate-producing machines 29 can be supplied via pipe 27. In distribution element 28 the desired quantity of polystyrene is supplied to the separate moulds 30 in the plate-producing devce 29, which moulds are illustrated in more detail in fig. 2. Steam and cooling water are supplied to the plate-producing machine 29 via lines 49 and 50 resp. and from the moulds 30 the plates 31 are obtained. Said plates are more specifically illustrated in fig. 3.

In fig. 2 mould 30, diagrammatically illustrated in fig. 1, part 2, is drawn in section, whereby it is apparent that the mould consists of two parts, viz. a fixed part 60 and a movable part 70. Both parts 60 and 70 consist of a casting 61 and 71 resp. made of aluminum provided with an insulating covering 67, 77, whilst the die mould 62, 72 respectively is made of a relatively hard material at the sides facing each other. Further both parts 60 and 70 have been provided with cooling water inlets 63 and 73 resp., with supply and exhaust pipes for steam indicated by 64 and 74 and with supply and exhaust pipes for steam, indicated by 65 and 75. The mould surfaces 62 and 72 are provided with very small perforations 66 and 76, equally divided across the mould surface, for letting through steam. Further illustrated in the fixed part 60 is a supply inlet 68 for supplying the granular polystyrene, provided with an upper layer, which is supplied to the mould via pipe 27 and is injected into the mould by way of supply inlet 68 via opening 69. The movable part of the mould is thereby moved towards the fixed part, so that only a thin slot remains between the two mould surfaces in which the granular polystyrene can be divided equally. Between the mould parts an air slot remains open for discharging the air taken along.

After the mould has been filled with the polystyrene granules under an excess pressure of 0.8–2.0 atmosphere, steam is supplied via steam inlet 75 which is exhausted via the perforations 76 and 66 by way of steam exhaust 65. By leading through said steam for a few seconds, e.g. two seconds, the polystyrene granules are further expanded, so that they form a closed surface in the mould, whereby the form of the mould is exactly assumed. Because in the first instance steam is supplied via steam inlet 75 and exhausted via steam exhaust 65, in a second processing steam is supplied via pipe 65, said steam remaining only in part 60, however, so that the polystyrene present at the side of the fixed part is subjected to an identical temperature as the polystyrene at the side of the movable part 70. After a few seconds, e.g. 3 seconds, the steam is exhausted via pipe 65, whereby the plate in the mould has been shaped definitely, although it cannot yet be relased because the temperature is about 100 °C and the plate is still in a condition too soft for releasing. In order to cool down the still plastic plate a reduced pressure is created in the casings 61 and 71 via the pipes 64 and 74, whereby the steam pipes 65 and 75 are shut off. By applying a reduced pressure remaining water in the formed plate is evaporated and because of the heat of evaporation heat is drawn from the polystyrene, as a result of which the temperature is lowered. On the other hand cooling water is supplied via the pipes 63 and 73, which cooling water does not come into direct contact with the polystyrene, however, because the cooling water is sprayed against the mould surface. Within ten seconds the temperature has been lowered sufficiently, viz. to below 40 °C, so that the mould can be opened by displacing the movable part 70. The plate is now form retaining and remains behind on the fixed part 60 and can be removed therefrom by means of suction sups. It is also possible to cool the moulded plate without supplying cooling water, viz. by only applying a reduced pressure, in which case the cooling only takes place under the influence of the heat of evaportation. In that case, however, the reduced pressure must be applied for 20–30 seconds instead of for 10 seconds as indicated in the first processing. In practice the combination of applying reduced pressure and atomizing cooling water is preferred.

In order to ensure that the moulded plate remains behind on the fixed side when the mould is opened, air can be supplied to the movable part via pipe 74, so that the release of the plate relative to the movable part is stimulated.

Fig. 3 illustrates a stack of 8 plates. These plates have an inner side 81, an upright edge 82 and a de-stacking slot 83. The upright edge 82 has been moulded thicker than the inner part 81 of the thin-walled plate 80, so that the thickened edge 82 provides the plate with a greater solidity. The de-stacking slot 83 makes it possible that with the mechanical packing of meat the packing machine can easily take a plate off a stack of several plates, which was problematic so far, because the plates obtained were not completely identical and not provided with such a de-stacking slot 83. The inner surface 81 of the plate is provided with upwardly protruding unevennesses, so that any moisture coming from the meat to be stored remains between the projections and does not come into direct contact with the meat or the product in the plate, provided the quantity of moisture separated is not too large. In the centre of the plate a bulge 84 is detectable, which has come about as a result of the air bump which is applied on the cooled down plate in order to remove it from the movable part 70 of the mould as has been discussed hereinabove.

The plates can have various forms such as rectangular forms or circular forms or polygonal forms as illustrated in fig. 3. With rectangularly shaped plates it is possible to provide the de-stacking slots along four sides, so that the plates can have two or four de-stacking slots.

As it is undesirable that juices coming from the material to be packed such as meat or fish remain in the plate, it has become customary to provide the plate, before use, with a sheet of paper or a moisture absorbing film, as known from the Dutch patent application 6 904 977. Putting in this sheet of paper is labour intensive because when the meat fish or fruit are packed a sheet of paper must be put in the plate at the packing machine, which sheet is also easily displaced during the packing process. Thereby it has been suggested with the improvement of these plates to provide such a sheet in the plate and fix it with glue which can be used in the foodstuffs industry. Thus, as a final stage of processing, a sheet of paper may be glued on plates which a used for packing material that may separate moisture, said gluing being no longer labour intensive because it can be done mechanically as a final operation before the stack of plates is packed and dispatched to the customer. Thus the invention also relates to the plates thus formed provided with a de-stacking slot and possibly provided with a sheet of paper applied by glueing.

## Claims

1. Method for producind thin-walled trays which are provided with one or more de-stacking slots applicable as packing material, from polystyrene, by supplying prepared polystyrene granules to a mould, in which the granules are heated so that they expand, the thus obtained plate-form being cooled and removed from the smould after stabilization, characterized in that the preparation of the polystyrene granules, i.e. the coating of the granules is carried out in-line with the production of the plates in the moulds.

2. Method according to claim 1, characterized in that polystyrene granules containing a blowing agent, such as pentane, having a diameter of 0,4–0,6 mm and provided with an equal coating, are pre-foamed with steam to a diameter of 0,8–1,2 mm fractioned by filtrating, after which the granules with a small size range are supplied to the mould.

## Patentansprüche

1. Verfahren zur Herstellung dünnwandiger Schalen, die mit einem oder mehreren Abstapelungsschlitzen ausgestattet sind, als Verpackungsmaterial aus Polystyrol durch Zuführen von vorbereiteten Polystyrolgranalien zu einer Form, in welcher die Granalien erhitzt und dabei expandiert werden, Kühlen der so erhaltenen Plattenform und Entnehmen aus der Form nach dem Stabilisieren, dadurch gekennzeichnet, dass die Vorbereitung der Polystyrolgranalien, d.h. das Überziehen der Granalien, in Linien mit dem Herstellen der Platten in den Formen vorgenommen wird.

2. Verfahren nach Anspruch 1, dadurch gekennzeichnet, dass die einen Blaszusatz, wie Pentan, mit einem Durchmesser von 0,4 bis 0,6 mm und einem gleichen Überzug, enthaltenden Polystyrolgranalien mit Dampf zu einem Durchmesser von 0,8 bis 1,2 mm vorgeschäumt und durch Filtern fraktioniert werden, worauf die Granalien mit der geringeren Korngrösse der Form zugeführt werden.

## Revendications

1. Procédé de production des barquettes à parois minces qui sont munis d'une ou de plusieurs fentes de désempilage, utilisables comme matériau d'emballage, à partir du polystyrène, par alimentation de granulés de polystyrène préparés dans un moule, dans lequel les granulés sont chauffés pour les faire dilater, le produit en forme de récipient ainsi obtenu étant refroidi et séparé du moule après stabilisation, caractérisé en ce que la préparation des granulés de polystyrène, c'est-à-dire le revêtement des granulés, est conduite en ligne directement avec la production des récipients dans les moules.

2. Procédé selon la revendication 1, caractérisé en ce que les granulés de polystyrène contenant un agent gonflant, tel que le pentane, ayant un diamètre de 0,4–0,6 mm et munis d'un revêtement égal, sont préalablement transformés en mousse par de la vapeur d'eau à un diamètre de 0,8–1,2 mm, fractionnés par tamisage, après quoi les granulés avec un petit intervalle de tailles sont alimentés dans le moule.

FIG. I.

EP 0 193 975 B1

FIG.2.

FIG.3.